# EUROPÄISCHE PATENTANMELDUNG

(11) **EP 1 396 480 A1**
(43) Veröffentlichungstag der Anmeldung: **10.03.2004**
(21) Anmeldenummer: 02017507.1
(22) Anmeldetag: 06.08.2002
(51) Int. Cl.: C05D 9/00, C05D 9/02

(54) **Eisen-(II)-Sulfat enthaltendes Düngemittel**

(71) Anmelder: Ferro Duo GmbH, 47053 Duisburg (DE)
(72) Erfinder: Kehrmann, Alexander, 47053 Duisburg (DE)
(74) Vertreter: Ksoll, Peter, Dr.-Ing.

(57) **Zusammenfassung**

Es wird ein Düngemittel, insbesondere als Rasendünger, vorgeschlagen in Form eines rieselförmigen Granulats aus einer Mischung aus feuchtem Grünsalz als Eisen-(II)-sulfat-Lieferant und einem Trockenmittel. Insbesondere kommt als Trockenmittel ein Silicagel zum Einsatz. Das Granulat enthält Trockenmittel in einer Menge zwischen 5 Gew.-% bis15 Gew.-%, insbesondere 10 Gew.-%. Die Korngröße des Granulats liegt zwischen 50 µm und 5 mm. Das Trockenmittel dient zur Trocknung und Feuchtigkeitspuffer zur Einstellung des feuchten Grünsalzes.

## Beschreibung

Die Erfindung betrifft ein Düngemittel, insbesondere einen Rasendünger als Granulat, welches Eisen-(II)-Sulfat enthält.

Rasenflächen werden in der Regel ganzjährig ohne Rücksicht auf Witterungseinflüsse genutzt. Hierdurch sind sie teilweise extremen Belastungen ausgesetzt. Demzufolge ist eine ausreichende Pflege der Grasnarbe erforderlich, um Schäden, insbesondere um eine Moos- und Unkräuterausbreitung zu verhindern.

Die bedarfsgerechten Nährstoffversorgung der Gräser ist entscheidend für eine dauerhafte gute Rasenqualität. Es gibt ein sehr großes Angebot an Rasendüngern, auch mit integrierten Moosvernichtern. Die Nährstoffkomponenten von Düngemitteln setzen sich im allgemeinen sowohl aus organischen als auch aus mineralischen Bestandteilen zusammen. In diesem Zusammenhang ist auch der Einsatz von Eisen-(II)-sulfat zur Eisenversorgung bei Rasen und Gehölzen bekannt. Eisen-(II)-sulfat gilt als Moosvernichter und fördert die Blattgrünbildung.

Bei den bekannten Düngemitteln kommt trockenes granulatförmiges Eisen-(II)-sulfat zur Anwendung. Hierfür ist eine Trocknung und Aufbereitung des Eisen-(ll)-sulfats notwendig, was sich entsprechend kostenerhöhend auf ein verkaufsfähiges Produkt niederschlägt. Nachteilig ist ferner, dass Eisen-(II)-sulfat durch Oxidation mit Luftsauerstoff an Wirksamkeit verliert und zu Alterungserscheinungen, insbesondere Verklumpen, neigt.

Der Erfindung liegt daher, ausgehend vom Stand der Technik, die Aufgabe zugrunde, ein kostengünstigen und sowohl herstellungs- als auch anwendungstechnisch verbessertes Düngemittel zu schaffen.

Die Lösung dieser Aufgabe besteht nach der Erfindung in einem Düngemittel, insbesondere als Rasendünger, gemäß den Merkmalen von Patentanspruch 1.

Das erfindungsgemäße Düngemittel besteht aus einem rieselfähigen Granulat in Form einer Mischung aus feuchtem Grünsalz als Eisen-(II)-sulfat-Lieferant und einem Trockenmittel, insbesondere einem inerten Trockenmittel.

Grünsalz fällt als Abfall oder Nebenprodukt bei verschiedenen industriellen Prozessen, beispielsweise der Titandioxidherstellung aus Titanerz, an. Bei der Titandioxidherstellung nach dem Sulfatverfahren wird das fein gemahlene Titanerz mit konzentrierter Schwefelsäure aufgeschlossen. Das im Erz enthaltene Eisenoxid reagiert zu Eisensulfat, das Titanerz zu Titansulfat. Die Abtrennung des Eisensulfats vom Titansulfat erfolgt durch Kristallisation. Aufgrund der höheren Wasserlöslichkeit kristallisiert das Eisensulfat zu grünem Eisen-(II)-sulfat aus und kann abgetrennt werden. Dieses sogenannte Grünsalz ist mithin ein Abfallprodukt der Titandioxidherstellung. Auch bei Beizprozessen, beispielsweise in Hüttenwerken, fällt Grünsalz an. Es ist in der Konsistenz feucht, besitzt jedoch die gleichen chemischen Eigenschaften, insbesondere was die Moosbekämpfung und Unkrautvernichtung anbelangt, wie trockenes Eisen-(II)-sulfat in Granulatform. Dabei ist Grünsalz wesentlich kostengünstiger. Durch die Mischung des feuchten Grünsalzes mit dem Trockenmittel erhält man ein rieselfähiges Produkt. Das Trockenmittel hat innerhalb der Mischung die Funktion der Trocknung und die eines Feuchtigkeitspuffers bzw. -regulators. Die Mischung erhält hierdurch die für den Einsatz als Düngemittel notwendigen Eigenschaften. Das Düngemittel kann als Streugut auf die Rasenflächen aufgebracht werden. Auch die Auflösung des Düngemittels in Wasser ist möglich. Das Düngemittel kann dann beispielsweise mittels einer Gießkanne auf die Rasenfläche aufgetragen werden.

Die Trocknungs- und Pufferwirkung des Trockenmittels gewährleistet eine optimale Einstellung des Grünsalzes. Die Oxidation mit Luftsauerstoff wird vermieden ebenso wie ein Verklumpen.

Erfindungsgemäß wird das feuchte Grünsalz zur Herstellung des Düngemittels verwendet. Eine aufwendige Aufbereitung oder Trocknung des Grünsalzes vor dessen Verarbeitung ist nicht erforderlich. Die Feuchtigkeitsregulierung übernimmt das Trockenmittel. Hierdurch können die Kosten für das Düngemittel reduziert werden. Auch die Lagerfähigkeit und Alterungsbeständigkeit des Düngemittels ist höher, da das Trockenmittel eine Feuchtigkeitsregulierung sicherstellt.

Insgesamt zeichnet sich das erfindungsgemäße Düngemittel sowohl durch seine herstellungs- als auch Anwendungstechnischen Vorteile aus und dies bei geringen Kosten in der Produktion. Es fördert die Blattgrünbildung und vernichtet zuverlässig Moos und Unkräuter. Das Düngemittel kann sowohl trocken als auch nass, also in Wasser aufgelöst auf die Rasenflächen aufgetragen werden. Beim trockenen Aufbringen kann das Düngemittel mit der Hand oder geigneten Streugeräten aufgebracht werden. Für den nassen Auftrag wird eine Düngemittellösung mit Wasser hergestellt. Für die Praxis ist von einem Mischungsverhältnis von Wasser zu Düngemittel zwischen 1,5 bis 2,5 : 1 auszugehen.

Als Trockenmittel kommen feinkörnige oder pulverförmige Substrate mit großer Oberflächenstruktur zur Anwendung, die hygroskopische Eigenschaften aufweisen, also Feuchtigkeit aufnehmen und auch abgeben können.

Als besonders gutes Trockenmittel wird gemäß Patentanspruch 2 ein Silicagel angesehen. Bei Silicagel, auch Kieselgel genannt, handelt es sich um eine feste amorphe Kieselsäure, deren Einsatz als Adsorptionsmittel für Gase, Dämpfe und Flüssigkeiten grundsätzlich bekannt ist. Es lässt sich mit verschiedenen Porendurchmessern herstellen. Silicagele absorbieren Feuchtigkeit auf ihrer großen inneren Oberfläche, die bis zu 800 m²/g betragen kann.

Silicagel wird synthetisch hergestellt als Kondensationsprodukt von Siliciumdioxid. Hierzu kann Natriumsilicat mit einer Mineralsäure, beispielsweise Schwefelsäure, gemischt werden. Aus diesen beiden Stoffen wird ein Sol (SiO₂, Na₂SO₄, H₂O) erzeugt, welches zu Gallerte erstarrt. Aus den zerkleinerten Gallertestücken wird das entstandene Natriumsulfat ausgewaschen. Die unterschiedlichen Eigenschaften wie Porenvolumen, Porendurchmesser und innere Oberfläche erreicht man durch Führung des Waschvorgangs mit unterschiedlichen pH-Werten, Temperaturen und anderen Parametern. Das gewaschene Produkt heißt Hydrogel. Nach dem Trocknen entsteht daraus Silicagel als ungleichförmiges Granulat.

Es hat sich herausgestellt, dass Silicagel besonders vorteilhaft ist für den Einsatz als Trockenmittel in der erfindungsgemäß vorgesehenen Mischung mit feuchtem Grünsalz.

Neben dem Hauptbestandteil Silicat (SiO₂) enthält das Silicagel noch Aluminium (Al₂O₃)_{'} Natrium (Na₂O), Sulfat (SO₄²⁻) sowie Eisen (Fe₂O₃), Kalium (K₂O), Lanthan (La₂O₃), Ammonium (NH₄⁺), Chlorid (Cl⁻) und Cer (Ce₂O₃). Auch Calcium (Ca) und Magnesium (Mg) kann enthalten sein.

Auch Tonerde, insbesondere aktivierte Tonerde, kann als Trockenmittel zum Einsatz gelangen, wie dies Patentanspruch 3 vorsieht. Aktivierte Tonerde ist aktiviertes Aluminiumoxid (Al₂O₃). Es handelt sich um ein natürliches Tonmineral (Bentonit) in bröseliger Form mit ähnlichen Adsorptionseigenschaften für Feuchtigkeit wie Silicagel.

Nach Patentanspruch 4 liegt der Anteil an Trockenmittel zwischen 5 Gew.-% und 15 Gew.-%, insbesondere bei ca. 10 Gew.-%, bezogen auf die Menge des Grünsalzes. Praktische Versuche haben hier sehr gute Ergebnisse gezeigt. Das Material ist rieselfähig, problemlos handhabbar und mit unterschiedlichsten Dosieraggregaten präzise und in exakt vorbestimmbaren Mengen zu konfektionieren und in geeignete Behältnisse abzufüllen.

Das erfindungsgemäße Düngemittel kann zu einer gezielten Eisenversorgung von Rasen und Gehölzen verwendet werden. Es wirkt besonders bei Rasen in feuchten schattigen Lagen. Das Düngemittel beseitigt Moos und wirkt einer Unkrautausbreitung entgegen. Es beseitigt auch rasch Eisenmangel (Chlorosen), beispielsweise bei Rhododendren oder Rosen. Zudem fördert das Düngemittel die Blattgrünbildung und regt das Pflanzenwachstum an. Bei Rasen wird auf das Zusammenwachsen der Grasnarbe unterstützt.

Zur zusätzlichen Versorgung des Bodens bzw. der Rasenflächen und anderer Pflanzen mit Mineralstoffen kann das Düngemittel weiterhin Mineralstoffe, insbesondere Stickstoff (N), Phosphor (P), Kalium (K), Calcium (Ca) und/oder Magnesium (Mg) enthalten (Patentanspruch 5). Durch die optimale Kombination des Eisen-(II)-Sulfats mit den vorgenannten Mineralien wird eine gute Sofort- und zuverlässige Langzeitwirkung erzielt.

Gemäß den Merkmalen von Patentanspruch 6 besitzt das Granulat aus Grünsalz und Trockenmittel eine Korngröße von 50 µm bis 5 mm, wobei als untere Korngröße 50 µm anzusehen ist. Die obere Korngröße liegt bevorzugt bei 1 mm.

## Patentansprüche

1. Düngemittel, insbesondere Rasendünger, als Granulat, welches Eisen-(II)-sulfat enthält, **dadurch gekennzeichnet, dass** das Granulat eine Mischung aus Grünsalz als Eisen-(II)-sulfat-Lieferant und einem Trockenmittel ist.

2. Düngemittel nach Anspruch 1, **dadurch gekennzeichnet, dass** das Trockenmittel ein Silicagel ist.

3. Düngemittel nach Anspruch 1, **dadurch gekennzeichnet, dass** das Trockenmittel Tonerde ist.

4. Düngemittel nach einem der Ansprüche 1 bis 3, **dadurch gekennzeichnet, dass** das Granulat Trockenmittel in einer Menge zwischen 5 Gew.-% bis 15 Gew.-%, insbesondere 10 Gew.-%, bezogen auf die Grünsalzmenge enthält.

5. Düngemittel nach einem der Ansprüche 1 bis 4, **dadurch gekennzeichnet, dass** das Granulat zusätzliche Mineralstoffe, insbesondere Stickstoff (N), Phosphor (P), Kalium (K), Calcium (Ca) und/oder Magnesium (Mg) enthält.

6. Düngemittel nach einem der Ansprüche 1 bis 5, **dadurch gekennzeichnet, dass** das Granulat eine Korngröße von 50 µm bis 5 mm, insbesondere von 50 µm bis 1 mm, besitzt.
